# EUROPEAN PATENT SPECIFICATION

(11) **EP 2 717 156 B1**
(45) Date of publication and mention of the grant of the patent: **24.06.2015**
(21) Application number: 13004800.2
(22) Date of filing: 04.10.2013
(51) Int. Cl.: G06F 9/30, G06F 9/38

(54) **Speculative privilege elevation**
Spekulative Privilegerhebung
Élévation de privilège spéculatif

(30) Priority: 04.10.2012 US 201213644688
(43) Date of publication of application: 09.04.2014
(73) Proprietor: Broadcom Corporation, Irvine, CA 92617 (US)
(72) Inventor: Ramirez, Ricardo, Sunnyvale, CA 94087 (US)
(74) Representative: Jehle, Volker Armin

(56) References cited:
- EP-A1- 0 220 920
- US-A1- 2002 042 874
- US-A1- 2004 098 548
- US-A1- 2004 168 047

## Description

### BACKGROUND

### FIELD

The present disclosure relates generally to processor architectures and, more specifically, to execution of privileged operations.

### DESCRIPTION OF THE BACKGROUND ART

In modem processing architectures, a typical central processing unit ("CPU") operates on a large number of threads of execution at a time, switching between threads dedicated to handling operating system tasks and threads for various applications execution on that operating system.

In order to provide some logical guarantees to the individual applications, as well as security, CPUs can restrict the set of operations that can be utilized by a typical application. In practice, only a small amount of trusted code at the heart of the operating system, termed the kernel, is allowed to operate without restriction at an elevated privilege (*e.g*., kernel mode, master mode, supervisor mode, etc.) and perform any operation requested of the CPU. Other applications, including other portions of the operating system, operate at lower security levels (*e.g*., user mode, or an intermediate mode).

On occasion, an application may need to utilize a restricted operation available only at an elevated privilege level. In order to do so, the application may perform a system call (or "syscall") to the kernel, which instructs the kernel to perform a certain operation on the application's behalf using the kernel's elevated privileges. However, system calls suffer from performance issues, for which a typical solution is to allow certain software (*e.g*., device drivers) to execute with elevated privileges at all times rather than having to request privilege elevation.

Accordingly, what is desired is an efficient technique for elevating privileges for a set of instructions.

### BRIEF SUMMARY OF THE INVENTION

According to an aspect, a method comprises:
detecting a privilege elevation instruction in a pipeline stage of a processor;
updating a privilege state in response to detection of the privilege elevation instruction; and
notifying a subsequent pipeline stage of the privilege state.

Advantageously, notifying the subsequent pipeline stage of the privilege state comprises:
determining the current privilege state from a privilege state store; and
sending a data bit indicating whether the current privilege state is elevated or not elevated.

Advantageously, detecting the privilege elevation instruction comprises:
detecting the privilege elevation instruction in a fetch stage of the processor.

Advantageously, detecting the privilege elevation instruction comprises:
detecting a syscall instruction.

Advantageously, detecting the privilege elevation instruction comprises:
reading an instruction data bit indicating that an instruction is a privilege elevation instruction.

Advantageously, the method further comprises:
blocking a subsequent instruction from issue until confirmation of completion of the privilege elevation instruction.

Advantageously, the method further comprises:
flushing the pipeline upon confirmation that the privilege elevation instruction is not executed; and
restoring the privilege state to a prior state corresponding to an instruction path misprediction.

Advantageously, the method further comprises:
permitting issue of a subsequent instruction at an elevated privilege.

Advantageously, the method further comprises:
retiring results of the subsequent instruction upon confirmation of completion of the privilege elevation instruction.

Advantageously, the method further comprises:
flushing and restoring the pipeline upon confirmation that the privilege elevation instruction is not executed.

According to an aspect, a processor comprises:
a processing pipeline implemented in hardware;
a privilege state store configured to store a privilege state; and
a pipeline stage of the processing pipeline configured to detect a privilege elevation instruction, to update the privilege state in response to detection of the privilege elevation instruction, and to notify a subsequent pipeline stage of the privilege state.

Advantageously, the pipeline stage is further configured to determine the current privilege state from the privilege state store and to send a data bit indicating whether the current privilege state is elevated or not elevated.

Advantageously, the pipeline stage comprises a fetch stage.

Advantageously, the pipeline stage is further configured to detect a syscall instruction.

Advantageously, the pipeline stage is further configured to read an instruction data bit indicating that an instruction is a privilege elevation instruction.

Advantageously, the processor further comprises:
a second pipeline stage of the processing pipeline configured to block a subsequent instruction from issue until confirmation of completion of the privilege elevation instruction.

Advantageously, the processing pipeline is configured to flush upon confirmation that the privilege elevation instruction is not executed and to restore the privilege state to a prior state corresponding to an instruction path misprediction.

Advantageously, the processor further comprises:
a second pipeline stage of the processing pipeline configured to permit issue of a subsequent instruction at an elevated privilege.

Advantageously, the processing pipeline is configured to retire results of the subsequent instruction upon confirmation of completion of the privilege elevation instruction.

Advantageously, the processing pipeline is configured to flush and restore upon confirmation that the privilege elevation instruction is not executed.

### BRIEF DESCRIPTION OF THE DRAWINGS

The accompanying drawings, which are incorporated herein and form a part of the specification, illustrate embodiments of the present disclosure and, together with the description, further serve to explain the principles of the disclosure and to enable a person skilled in the relevant art to make and use the disclosed embodiments.
FIG. 1 illustrates a processing pipeline, in accordance with an embodiment.
FIG. 2 is an instruction stream, in accordance with an embodiment.
FIG. 3 is a flowchart illustrating steps by which a prediction module operates, in accordance with an embodiment.
FIG. 4 is a flowchart illustrating steps for reducing the cost of a pipeline flush in the event of a privilege elevation misprediction, in accordance with an embodiment.
FIG. 5 is a flowchart illustrating an aggressive approach for improving performance of a pipeline in the event of a correct privilege elevation prediction, in accordance with an embodiment.

The present disclosure will now be described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

### I. INTRODUCTION

The following detailed description refers to the accompanying drawings that illustrate exemplary embodiments. Other embodiments are possible, and modifications can be made to the embodiments within the spirit and scope of the disclosure. Therefore, the detailed description is not meant to limit the disclosure.

It would be apparent to one of skill in the art that the present disclosure, as described below, can be implemented in many different embodiments of software, hardware, firmware, and/or the entities illustrated in the figures. Any actual software code with the specialized control of hardware to implement the present disclosure is not limiting of the present disclosure. Thus, the operational behavior of the present disclosure will be described with the understanding that modifications and variations of the embodiments are possible, and within the scope and spirit of the present disclosure.

Reference to modules in this specification and the claims means any combination of hardware or software components for performing the indicated function. A module need not be a rigidly defined entity, such that several modules may overlap hardware and software components in functionality. For example, a software module may refer to a single line of code within a procedure, the procedure itself being a separate software module. One skilled in the relevant arts will understand that the functionality of modules may be defined in accordance with a number of stylistic or performance-optimizing techniques, for example.

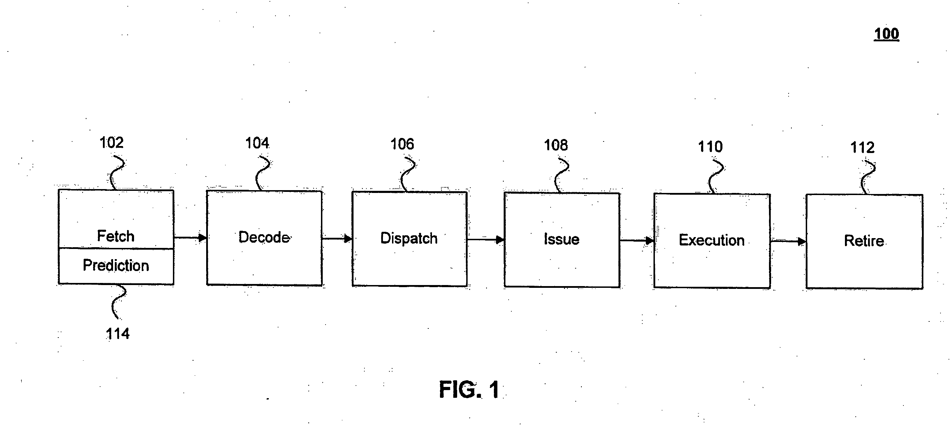

FIG. 1 illustrates a processing pipeline 100, in accordance with an embodiment. Pipeline 100 includes fetch stage 102, decode stage 104, dispatch stage 106, issue stage 108, execution stage 110, and retire stage 112. One skilled in the relevant arts will recognize, however, that other arrangements of stages, to include combination of stages represented in pipeline 100 or further division of stages, or both, are all contemplated within the scope of this disclosure.

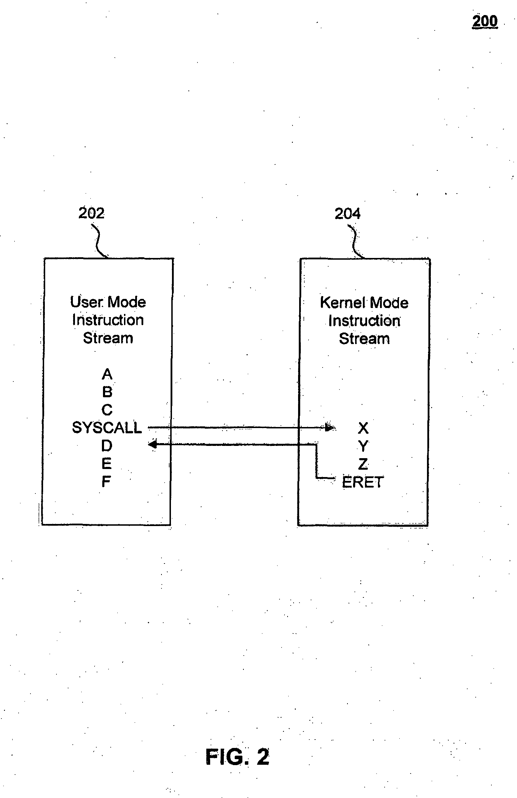

FIG. 2 is an instruction stream 200, in accordance with an embodiment. Instruction stream 200 is separated into a non-elevated privilege (*e.g*., "user") mode instruction stream 202 and an elevated privilege (*e.g*., "kernel") mode instruction stream 204. In conjunction with processing pipeline 100 of FIG. 1, this exemplary instruction stream 200 is used to illustrate the operation of existing approaches and disclosed embodiments.

In a traditional approach, a set of instructions may be fetched by fetch stage 102 in the order A, B, C, SYSCALL, D, E, F, by way of non-limiting example. When the SYSCALL instruction is fetched into pipeline 100 at fetch stage 102, it is not immediately recognized by the processor as a SYSCALL instruction. Only once the instruction is further down the pipeline (*e.g*., at decode stage 104, which may be several stages later in a longer pipeline) will it be recognized as such, and only at an even later stage (*e.g*., execution stage 110) would it be confirmed that the SYSCALL function is actually executed.

However, under the traditional approach, instructions D, E, and F following the SYSCALL instruction, as shown in user mode instruction stream 202, have been loaded into the pipeline as user mode privilege instructions. In order to process the kernel mode instruction stream 204, the pipeline will either need to be flushed upon execution of the SYSCALL instruction and loaded with instructions X, Y, Z, and ERET (which indicates the return of control to the user mode instruction stream) at an elevated privilege level, or the dispatch of instructions D, E, and F can be stalled.

Accordingly, the traditional operation of the SYSCALL instruction is to act as an exception. When the SYSCALL instruction is executed, the pipeline 100 is flushed in a typical example. In the foregoing example, subsequent instructions D, E, and F would be flushed from the pipeline, and any changes-made by processing of those instructions through pipeline 100 would not be committed. Instructions X, Y, and Z, as well as the ERET instruction, would then be fetched by fetch stage 102 at an elevated privilege level. Once control is returned to the user mode instruction stream, instructions D, E, and F could then be re-fetched and executed.

The aforementioned approach suffers from the need to fully flush the pipeline after a SYSCALL instruction is executed, or to at least stall execution, causing several lost processing cycles. As with branch misprediction, the cost is equivalent to the number of stages from the fetch stage to the execution stage of pipeline 100. This cost, which would be incurred frequently by some types of software (*e.g*., device drivers), is generally considered unacceptable by software developers. This has led to the practice by some developers of simply providing elevated privileges to the entire piece of software (*e.g*., by running device drivers in kernel mode) and accepting the security risk associated with providing kernel mode privileges to that code (*i.e*., software executing in kernel mode should be trusted).

### II. PRIVILEGE ESCALATION PREDICTION

A proposed solution in accordance with an embodiment relies on a privilege elevation mechanism that operates in a manner similar to a branch predictor. Instead of having to execute the entire piece of software with elevated privileges (as is typically done with device drivers) in order to avoid the performance cost associated with pipeline flushes as described above, a solution in accordance with an embodiment provides for speculative privilege elevation. As shown in pipeline 100, exemplary fetch stage 102 includes a prediction module 114, in accordance with an embodiment. Prediction module 114 can be integral to, or separate from, prediction functionality for handling branch prediction and any other predictive operations in pipeline 100.

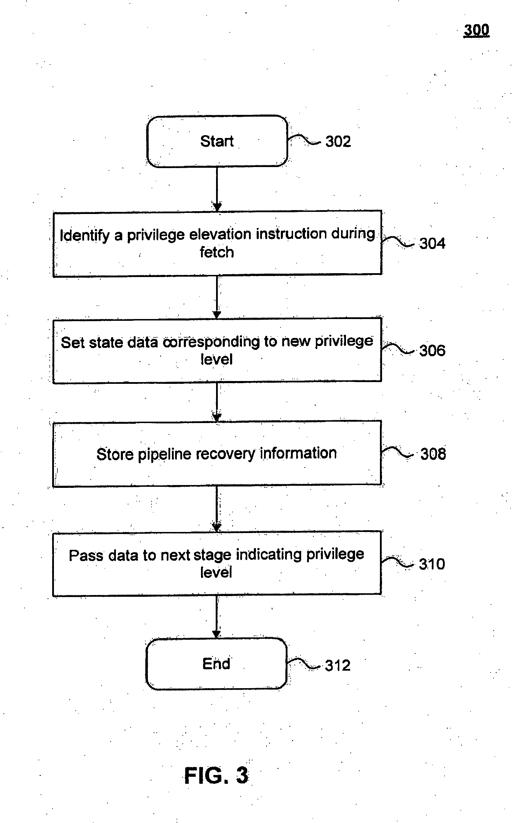

In accordance with an embodiment, prediction module 114 determines at an early stage of pipeline 100 (*e.g*., fetch stage 102) whether a current instruction in that stage is a valid SYSCALL instruction. FIG. 3 is a flowchart 300 illustrating steps by which the prediction module 114 operates, in accordance with an embodiment. The method begins at step 302 and proceeds to step 304 where a privilege elevation instruction is identified early in pipeline 100 (*e.g*., at fetch stage 102). By way of non-limiting example, such identification is facilitated by an extra instruction bit indicating that the instruction is a SYSCALL instruction, and decoding of that extra bit by the fetch stage 102 (and operation normally reserved for the decode stage 104). Alternatively, by way of further non-limiting example, the exact set of instruction bits used for a SYSCALL instruction can be detected at fetch stage 102 to identify the instruction as a SYSCALL instruction. Implementation of such detection functionality is significantly simpler than a complex decode stage 104, provided it is used for a limited purpose such as detecting a specific instruction. One skilled in the relevant arts will recognize that other techniques for identifying the SYSCALL instruction, including any utilized with branch prediction, may be used and are contemplated within the scope of this disclosure.

Speculative privilege elevation in this manner effectively promotes the task of executing the SYSCALL instruction to an early stage of pipeline 100, such as fetch stage 102. The responsible logic will, upon identifying the SYSCALL instruction, begin fetching from the exception handling code and elevate the privilege level accordingly. This avoids the need, as with the traditional approach, to fetch and begin processing the subsequent instructions in the user mode instruction stream (*e.g*., instructions D, E, and F), and can therefore avoid the need to flush those instructions.

The method then proceeds to step 306 where state data corresponding to the new privilege level is set, in accordance with an embodiment. This state data can be stored in a memory that can be rapidly accessed by fetch stage 102. At step 308, pipeline recovery information is stored in an embodiment in order to recover the state of the pipeline and the current instruction being processed (*e.g*., as indicated by a program counter) in the event of a privilege elevation misprediction, discussed in further detail below. At step 310, the state data is passed to the next pipeline stage (*e.g*., decode stage 104), indicating the elevated privilege level of the instruction, in accordance with an embodiment. The effect is such that while the state data indicating elevated privileges is present (*e.g*., a bit indicating kernel mode operation), any subsequent instructions will be passed to the next pipeline stage of pipeline 100 together with a corresponding privilege data. This data is passed together with the instruction (*e.g*., instructions X, Y, and Z in the above example) through as many stages as the notion of elevated privileges is relevant, which may be the entire pipeline or some portion thereof. The method then ends at step 312.

One exemplary implementation is to dispose a latch between fetch stage 102 and the subsequent stage (*e.g*., decode stage 104) to serve as the state data store, in accordance with an embodiment. The data latched by this latch is modified whenever the privilege state changes, and provides decode stage 104 with the corresponding privilege level for an instruction. Each subsequent stage may continue to pass this bit or bits of data to other subsequent stages as needed, and the architecture of pipeline 100 is developed, in accordance with an embodiment, to accommodate passage of this extra data among the pipeline stages.

One skilled in the relevant arts will further recognize that the techniques described herein may be applied to other types of instructions with similar characteristics to a SYCALL instruction. For example, other privilege elevation instructions may operate in a similar manner and are contemplated within the scope of this disclosure. Likewise, hypervisor calls in a virtualized environment (*i.e*., calls made by a virtualized environment to the hypervisor) can benefit from a similar approach. In newer CPU architectures, embedded virtualization support includes the addition of new privilege levels in which the hypervisor operates in, and calls can be made for transitioning to hypervisor mode (as with kernel mode in the examples provided herein). These approaches are also contemplated within the scope of this disclosure.

### III. PRIVILEGE COMMITMENT AND RESOLUTION

With the privilege escalation instruction (*e.g*., SYSCALL) identified and the instructions following the SYSCALL being flagged for execution at an elevated privilege level, it nevertheless remains possible for the SYSCALL instruction itself to not execute. For example, the SYSCALL instruction may be part of a mispredicted instruction branch, or an exception or interrupt may be executed prior to execution of the SYSCALL instruction by the execution pipeline stage (*e.g*., stage 110).

In the case of a branch misprediction, one skilled in the relevant arts will appreciate that a number of existing techniques can be utilized in the form of branch misprediction correction logic to correct the processor's fetch logic and ensure that any instructions from the mispredicted path are flushed out and do not commit any state information. In addition, this exemplary solution including speculative privilege elevation provides for correcting the privilege level and broadcasting this corrected privilege level to the fetch stage 102. As a result, subsequent instructions fetched from the correct branch will be fetched with the correct privilege level.

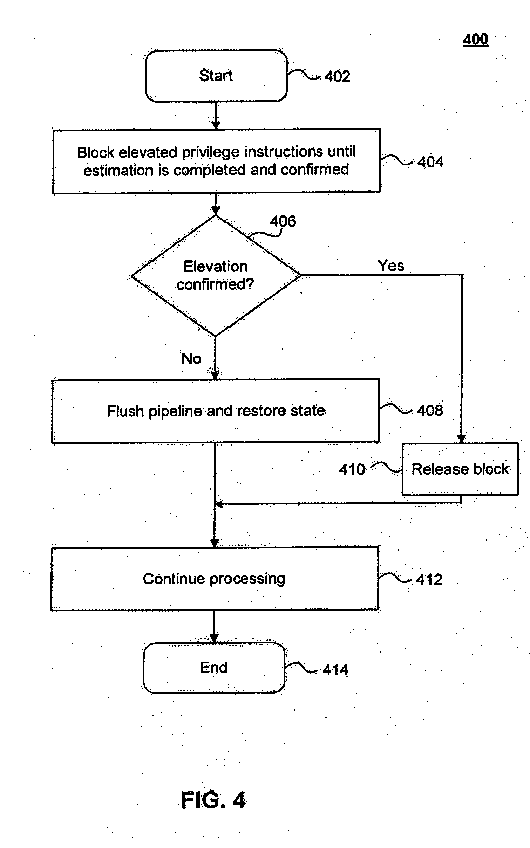

Several techniques can be utilized for reducing the cost of such a pipeline flush, or for compromising on the cost in exchange for increased performance when such a pipeline flush is not needed. FIG. 4 is a flowchart 400 illustrating steps for reducing the cost of a pipeline flush in the event of a privilege elevation misprediction, in accordance with an embodiment. The method begins at step 402 and proceeds to step 404 where any elevated privilege instructions following a SYSCALL are blocked from execution. In the exemplary pipeline 100 of FIG. 1, such blocking can occur prior to the issue stage 108, although one skilled in the relevant arts will appreciate that other similar techniques are contemplated. In accordance with an embodiment, blocking the elevated privilege instructions from execution blocks the instructions from issue to at least one execution unit until retirement of the SYSCALL instruction.

At step 406, a determination is made as to whether privilege elevation by the SYSCALL was successfully made at the later pipeline stage (*e.g*., during execution of the SYSCALL instruction at execution stage 110). If privilege elevation was in fact successful, then the block is released at step 410 and the instructions continue processing at step 412, as noted above. However, if the SYSCALL instruction was not executed (due to, *e.g*., a branch misprediction or an exception or interrupt that prevents the SYSCALL instruction from executing), the result is a privilege elevation misprediction. At step 408, the mispredicted instructions having an elevated privilege level are flushed, and the pipeline 100 state is recovered to the point at which the misprediction occurred. In accordance with an embodiment, pipeline 100 state recovery relies on information stored at step 308 of FIG. 3, allowing embodiments of this invention to be practiced in combination with existing branch misprediction handling logic. The instructions can then be fetched again by fetch stage 102 at the normal user privilege. The method then ends at step 414.

A non-limiting example where this approach would be utilized is in the case where a branch prediction causes pipeline 100 to process the instructions of instruction stream 200. The instructions may be processed in the order A, B, C, SYSCALL, then into kernel mode instructions 204 X, Y, and Z based on the speculative privilege elevation process described above. While speculatively executing instructions X, Y, and Z at an elevated privilege level, the pipeline may be notified that the entire branch (*e.g*., all of instruction stream 200) was mispredicted, and execution should be taking place on a different set of instructions. This could occur if, for example, instruction B is a branch or interrupt instruction that was initially mispredicted by pipeline 100. Using the aforementioned approach, the CPU fetch logic is redirected to the correct branch (*e.g*., instructions R, S, T, etc., corresponding to instructions of the correct instruction branch). In addition, since the privilege level at the time of the misprediction has been stored in an embodiment, the privilege level is restored to the state at the time when the branch instruction was fetched.

The ability to restore the privilege level to the prior state corresponding to the time of the mispredicted branch allows for effects of speculative privilege elevation (*e.g*., executing instructions in kernel mode) to be reverted in case the privilege elevation should never have occurred. In an embodiment, existing branch misprediction logic performs a number of tasks, such as reverting the program counter to an earlier state, in order to undo the effects of a branch misprediction. The disclosed approach further provides facilities for undoing the effects of privilege elevation in a similar manner, in the event that the privilege elevation instruction (*e.g*., SYSCALL) should never have executed.

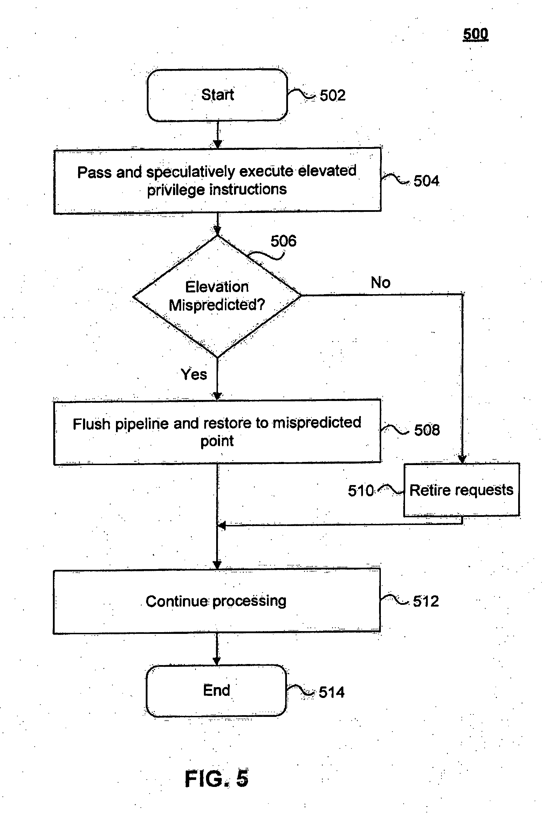

FIG. 5 is a flowchart 500 illustrating an aggressive approach for improving performance of a pipeline in the event of a correct privilege elevation prediction, in accordance with an embodiment. The method begins at step 502 and proceeds to step 504 where the instructions having predicted elevated privilege levels are passed through pipeline 100 for execution (*e.g*., at stage 110). In contrast to the approach of flowchart 400 in FIG. 4, the instructions are not blocked until a determination on the propriety of the privilege elevation is reached. At step 506, a determination is made as to whether privilege elevation was mispredicted and, if not, the method proceeds to step 510 where the results of execution of the elevated privilege instructions are retired and processing continues at step 512.

However, if privilege elevation was mispredicted, the pipeline is flushed at step 508 and the first mispredicted instruction is fetched again at fetch stage 102, a process that is similar to that of flowchart 400 in FIG. 4. But by allowing the instructions to execute at an elevated privilege level (*e.g*., at execution stage 110), certain state information in the processor or memory may be incorrect and need to be restored to a prior condition, in accordance with an embodiment. This approach needs to introduce additional compensating functionality to restore the prior state of the pipeline 100. Processing again continues at step 512, and the method ends at step 514.

### IV. CONCLUSION

While various embodiments of the present disclosure have been described above, it should be understood that they have been presented by way of example only, and not limitation. It will be understood by those skilled in the relevant art(s) that various changes in form and details may be made therein without departing from the spirit and scope of the disclosure as defined in the appended claims. It should be understood that the disclosure is not limited to these examples. The disclosure is applicable to any elements operating as described herein. Accordingly, the breadth and scope of the present disclosure should not be limited by any of the above-described exemplary embodiments, but should be defined only in accordance with the following claims and their equivalents.

## Claims

1. A method comprising:
detecting a privilege elevation instruction in a fetch stage (102) of a processor;
updating a privilege state in response to detection of the privilege elevation instruction;
notifying a subsequent pipeline stage of the privilege state **characterised by**,
blocking (404) a subsequent instruction from issue (108) until confirmation (406) of completion of the privilege elevation instruction; and
flushing and restoring (408, 508) the pipeline (100) upon confirmation that the privilege elevation instruction is not executed.

2. The method of claim 1, wherein notifying the subsequent pipeline stage of the privilege state comprises:
determining the current privilege state from a privilege state store; and
sending a data bit indicating whether the current privilege state is elevated or not elevated.

3. The method of any preceding claim, wherein detecting the privilege elevation instruction comprises:
detecting a syscall instruction.

4. The method of any preceding claim, wherein detecting the privilege elevation instruction comprises:
reading an instruction data bit indicating that an instruction is a privilege elevation instruction.

5. The method of any preceding claim, further comprising:
flushing (408, 508) the pipeline (100) upon confirmation that the privilege elevation instruction is not executed; and
restoring (408, 508) the privilege state to a prior state corresponding to an instruction path misprediction.

6. The method of any preceding claim, further comprising:
permitting issue (108) of a subsequent instruction at an elevated privilege.

7. The method of claim 6, further comprising:
retiring (112, 510) results of the subsequent instruction upon confirmation of completion of the privilege elevation instruction.

8. A processor comprising:
a processing pipeline (100) implemented in hardware;
a privilege state store configured to store a privilege state;
a pipeline stage of the processing pipeline configured to detect a privilege elevation instruction in a fetch stage (102) of the processor, to update the privilege state in response to detection of the privilege elevation instruction in the fetch stage (102) of the processor, and to notify a subsequent pipeline stage of the privilege state**characterised by**
a second pipeline stage of the processing pipeline (100) configured to block (404) a subsequent instruction from issue (108) until confirmation of completion of the privilege elevation instruction; and
the processing pipeline further configured to flush and restore (408, 508) upon confirmation that the privilege elevation instruction is not executed.

9. The processor of claim 8, wherein the pipeline stage is further configured to determine the current privilege state from the privilege state store and to send a data bit indicating whether the current privilege state is elevated or not elevated.

10. The processor of any of claims 8 to 9, wherein the pipeline stage is further configured to detect a syscall instruction.

11. The processor of any of claims 8 to 10, wherein the pipeline stage is further configured to read an instruction data bit indicating that an instruction is a privilege elevation instruction.

## Patentansprüche

1. Verfahren, das umfasst:
Ermitteln eines Privileg-Anhebungsbefehls in einem Abholstadium (102) eines Prozessors;
Aktualisieren eines Privileg-Zustands im Ansprechen auf das Ermitteln des Privileg-Anhebungsbefehls;
Melden eines folgenden Pipeline-Stadiums des Privileg-Zustands;
**gekennzeichnet durch**
Blockieren (404) eines Folgebefehls von der Ausgabe (108) bis zur Bestätigung (406) des Abschlusses des Privileg-Anhebungsbefehls; und
Spülen und Zurückführen (408, 508) der Pipeline (100) nach Bestätigung, dass der Privileg-Anhebungsbefehl nicht ausgeführt wird.

2. Verfahren nach Anspruch 1, wobei das Melden des folgenden Pipeline-Stadiums des Privileg-Zustands umfasst:
Bestimmen des aktuellen Privileg-Zustands aus einem Privileg-Zustand-Speicher; und
Senden eines Datenbits, das angibt, ob der aktuelle Privileg-Zustand angehoben oder nicht angehoben ist.

3. Verfahren nach einem der vorhergehenden Ansprüche, wobei das Ermitteln des Privileg-Anhebungsbefehls umfasst:
Ermitteln eines Systemaufruf (syscall) -Befehls.

4. Verfahren nach einem der vorhergehenden Ansprüche, wobei das Ermitteln des Privileg-Anhebungsbefehls umfasst:
Lesen eines Befehlsdatenbits, das angibt, dass ein Befehl ein Privileg-Anhebungsbefehl ist.

5. Verfahren nach einem der vorhergehenden Ansprüche, das des Weiteren umfasst:
Spülen (408, 508) der Pipeline (100) nach Bestätigung, dass der Privileg-Anhebungsbefehl nicht ausgeführt wird; und
Zurückführen (408, 508) des Privileg-Zustands in einen früheren Zustand entsprechend einer Befehlspfad-Falschvorhersage.

6. Verfahren nach einem der vorhergehenden Ansprüche, das des Weiteren umfasst:
Erlauben der Herausgabe (108) eines Folgebefehls mit angehobenem Privileg.

7. Verfahren nach Anspruch 6, das des Weiteren umfasst:
Zurückziehen (112, 510) der Ergebnisse des Folgebefehls nach Bestätigung des Abschlusses des Privileg-Anhebungsbefehls.

8. Prozessor mit:
einer Verarbeitungspipeline (100), die in Hardware implementiert ist;
einem Privileg-Zustand-Speicher, der dazu konfiguriert ist, einen Privileg-Zustand zu speichern;
einem Pipeline-Stadium der Verarbeitungspipeline, das dazu konfiguriert ist, einen Privileg-Anhebungsbefehl in einem Abholstadium (102) des Prozessors zu ermitteln, den Privileg-Zustand im Ansprechen auf die Ermittlung des Privileg-Anhebungsbefehls in dem Abholstadium (102) des Prozessors zu aktualisieren, und ein folgendes Pipeline-Stadium des Privileg-Zustands mitzuteilen;
**gekennzeichnet durch**
ein zweites Pipeline-Stadium der Verarbeitungspipeline (100), das dazu konfiguriert ist, einen Folgebefehl bis zur Bestätigung des Abschlusses des Privileg-Anhebungsbefehls von der Herausgabe (108) zu blockieren (404); und
wobei die Verarbeitungspipeline des Weiteren zum Spülen und
Zurückführen (408, 508) nach Bestätigung, dass der Privileg-Anhebungsbefehl nicht ausgeführt wird, konfiguriert ist.

9. Prozessor nach Anspruch 8, wobei das Pipeline-Stadium des Weiteren dazu konfiguriert ist, den aktuellen Privileg-Zustand aus dem Privileg-Zustand-Speicher zu bestimmen und ein Datenbit zu senden, das angibt, ob der aktuelle Privileg-Zustand angehoben oder nicht angehoben ist.

10. Prozessor nach einem der Ansprüche 8 bis 9, wobei das Pipeline-Stadium des Weiteren dazu konfiguriert ist, einen Systemaufruf (syscall) -Befehl zu ermitteln.

11. Prozessor nach einem der Ansprüche 8 bis 10, wobei das Pipeline-Stadium des Weiteren dazu konfiguriert ist, ein Befehlsdatenbit zu lesen, das angibt, dass ein Befehl ein Privileg-Anhebungsbefehl ist.

## Revendications

1. Procédé comprenant :
la détection d'une instruction d'élévation de privilège dans un étage de recherche (102) d'un processeur ;
la mise à jour d'un état de privilège en réponse à la détection de l'instruction d'élévation de privilège ;
la notification d'un étage de pipeline suivant de l'état de privilège, **caractérisé par**
le blocage (404) d'une instruction suivante à l'émission (108) jusqu'à confirmation (406) de la bonne fin de l'instruction d'élévation de privilège ; et
le vidage et la restauration (408, 508) du pipeline (100) à confirmation que l'instruction d'élévation de privilège n'est pas exécutée.

2. Procédé selon la revendication 1, dans lequel la notification de l'étage de pipeline suivant de l'état de privilège comprend :
la détermination de l'état de privilège courant à partir d'une mémoire de stockage d'états de privilège ; et
l'envoi d'un bit de données indiquant si l'état de privilège courant est élevé ou non élevé.

3. Procédé selon une quelconque revendication précédente, dans lequel la détection de l'instruction d'élévation de privilège comprend :
la détection d'une instruction d'appel système.

4. Procédé selon une quelconque revendication précédente, dans lequel la détection de l'instruction d'élévation de privilège comprend :
la lecture d'un bit de données d'instruction indiquant qu'une instruction est une instruction d'élévation de privilège.

5. Procédé selon une quelconque revendication précédente, comprenant en outre :
le vidage (408, 508) du pipeline (100) à confirmation que l'instruction d'élévation de privilège n'est pas exécutée ; et
la restauration (408, 508) de l'état de privilège à un état antérieur correspondant à une prédiction erronée de chemin d'instruction.

6. Procédé selon une quelconque revendication précédente, comprenant en outre :
l'autorisation d'une émission (108) d'une instruction suivante à un privilège élevé.

7. Procédé selon la revendication 6, comprenant en outre :
le retrait (112, 510) de résultats de l'instruction suivante à confirmation de la bonne fin de l'instruction d'élévation de privilège.

8. Processeur comprenant :
un pipeline (100) de traitement mis en oeuvre dans le matériel ;
une mémoire de stockage d'états de privilège configurée pour stocker un état de privilège ;
un étage de pipeline du pipeline de traitement configuré pour détecter une instruction d'élévation de privilège dans un étage de recherche (102) du processeur, pour mettre à jour l'état de privilège en réponse à la détection de l'instruction d'élévation de privilège dans l'étage de recherche (102) du processeur, et pour notifier un étage de pipeline suivant de l'état de privilège, **caractérisé par**
un deuxième étage de pipeline du pipeline (100) de traitement configuré pour bloquer (404) une instruction suivante à l'émission (108) jusqu'à confirmation de la bonne fin de l'instruction d'élévation de privilège; et
le pipeline de traitement configuré en outre pour vider et restaurer (408, 508) à confirmation que l'instruction d'élévation de privilège n'est pas exécutée.

9. Processeur selon la revendication 8, dans lequel l'étage de pipeline est en outre configuré pour déterminer l'état de privilège courant à partir de la mémoire de stockage d'états de privilège et pour envoyer un bit de données indiquant si l'état de privilège courant est élevé ou non élevé.

10. Processeur selon l'une quelconque des revendications 8 à 9, dans lequel l'étage de pipeline est en outre configuré pour détecter une instruction d'appel système.

11. Processeur selon l'une quelconque des revendications 8 à 10, dans lequel l'étage de pipeline est en outre configuré pour lire un bit de données d'instruction indiquant qu'une instruction est une instruction d'élévation de privilège.
